# EUROPEAN PATENT APPLICATION

(11) **EP 0 629 481 A1**
(43) Date of publication of application: **21.12.1994**
(21) Application number: 94201709.6
(22) Date of filing: 15.06.1994
(51) Int. Cl.: B29C 45/14, A44B 13/00

(54) **Mould for moulding plastic elements on thin flexible material and elements moulded thereby**

(30) Priority: 18.06.1993 IT MI931320
(71) Applicant: Facchinetti, Annamaria, I-24021 Albino, (Bergamo) (IT)
(72) Inventor: Ricuperati, Giampaolo, I-24021 Albino, Bergamo (IT)
(74) Representative: Faraggiana, Vittorio, Dr. Ing.

(57) **Abstract**

A mould (10,110) for moulding an element for covering an edge of a thin sheet of material, in particular fabric, comprising an chamber (13,113) with a substantially C-shaped section which clasps the edge and extends along the two sides of the sheet. The chamber (13,113) is provided on either side of the sheet with internal protrusions (14,114) opposingly directed towards the surface of the sheet to clamp it between them close to the edge. An eyelet (20) produced with a mould of this kind comprises a first innermost annular portion (21) having a generically C-shaped radial section which incorporates the edge of the hole and extends with the ends of the C along the two sides of the sheet (11). Each end of the C faces an annular element (22,23) disposed concentrically adhering to the corresponding surface of the sheet (11) and connected by means of ribs (24) to the first portion (21).

## Description

This invention refers to an innovative mould for covering cut edges in flexible thin material, in particular fabric, with elements moulded from plastic material. For example, it is advantageously possible to produce fabric belts having sturdy covered loops for the buckle or for hanging objects on it and/or ends incorporated into terminals made of plastic material.

In making holes through fabrics or the like it is customary to cover the hole in order to prevent the material from weakening or becoming frayed. In the case of sufficiently rigid or compact materials, the hole can simply be reinforced by moulding an eyelet onto it with a generically U-shaped cross section so as to grip its edges. In the case of materials made by weaving or the like, the inevitable fraying around the edge of the hole prevents the protective eyelet from being moulded satisfactorily. In fact, the frayed edge cannot be held perfectly at the centre of the mould during injection of the plastic, since the flow of plastic itself tends to separate the threads and cause the edge to be incorporated to fray into a fringe. Similar problems are encountered in producing terminals, such as buckles, clasps or the like at the ends of belts or braces made of textile material.

In order to obviate the problem, in the case of meltable materials, such as for example, nylon fabrics or the like, it has been suggested to melt together the threads along the edge of the cut or hole before moulding the coating. However, the need to carry out an additional operation increases the manufacturing costs.

An alternative could be to use elements made of sheet metal to be clamped onto the edge of the cut. For example, it is possible to use conventional preformed metal eyelets which are clamped over the edge of the hole.

This solution, however, does not provide the high degree of resistance offered by incorporating the edges inside molten plastic elements.

The general scope of this invention is to obviate the aforementioned problems by providing an innovative mould and elements produced thereby which solve the problem of moulding the coating of cut edges in thin flexible materials, in particular fabrics.

This scope is achieved, according to the invention, by providing a mould for moulding an element for covering an edge of a thin sheet of material, in particular fabric, comprising a chamber with a substantially C-shaped section crosswise to the extension of the edge which clasps the edge and extends along both sides of the sheet, the chamber being provided on both sides of the sheet with internal protrusions opposingly directed towards the surface of the sheet to clamp it between them close to said edge.

This scope is further achieved by providing elements for covering an edge of a strip or of a hole made in the thin material, such as for example, an eyelet for covering the edge of a hole comprising a first inner annular portion with a generically C-shaped radial section which incorporates the edge of the hole and extends with the ends of the C along both sides of the sheet, each end of the C being opposed by an annular element disposed concentrically adhering to the corresponding surface of the sheet and connected to the first portion by means of ribs.

The innovatory principles of this invention and its advantages with respect to the known technique will be more clearly evident from the following description of possible exemplificative embodiments applying such principles, with reference to the accompanying drawings, in which:
- figure 1 shows a cross-sectional view along the line I-I of figure 2, of a mould according to the invention in position over a hole to be covered with an eyelet made of plastic material;
- figure 2 shows a plan view of a half mould made according to the invention;
- figure 3 shows a view similar to that of figure 2, after moulding and opening of the mould;
- figure 4 shows a perspective view of a moulded terminal clamped onto the end of a strip of flexible material such as a belt;
- figure 5 shows a schematic longitudinal cross-sectional view of a mould according to the invention for producing the terminal of figure 4;
- figure 6 shows a cross-sectional view along the line VI-VI of figure 5.

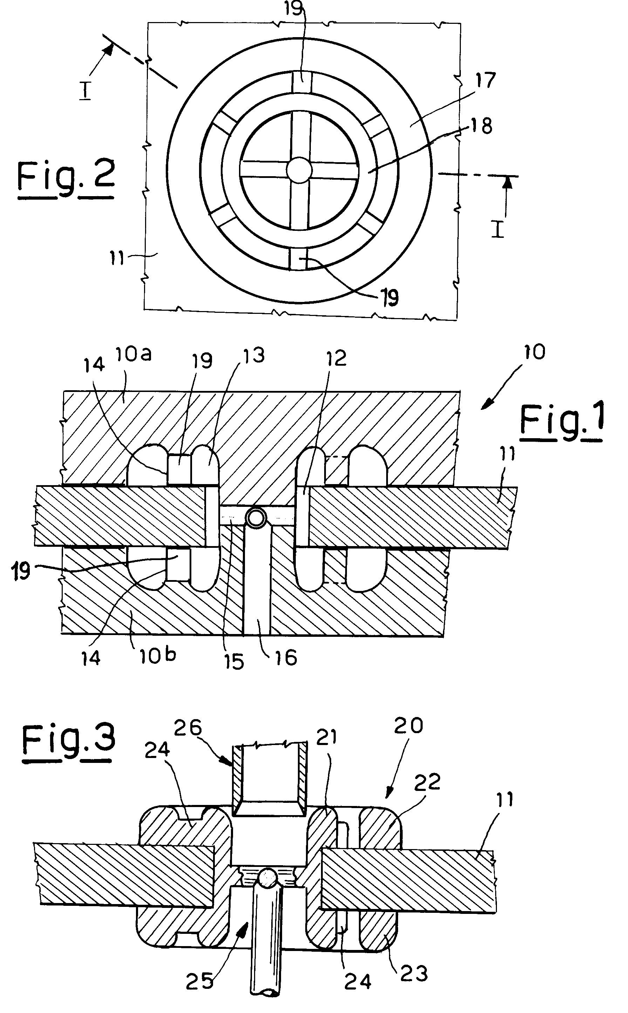

With reference to the figures, figure 1 shows a first mould, generically indicated by reference 10, composed for example of two half-shells 10a and 10b, closed over a sheet of material 11, in particular fabric, in correspondence with a hole 12 to be covered with an eyelet. The mould comprises an annular chamber 13 with a C-shaped radial section which clasps the edge of the hole and extends along the two surfaces of the sheet. The sheet can be for example a belt woven in nylon or other synthetic material. The principles of the invention are obviously also applicable to other materials and uses, as can be easily imagined by the expert in the field.

On the opposing sides of the sheet, the chamber 13 comprises protrusions 14 directed towards their respective surface of the sheet in order to clamp it between them close to the edge of the hole. The chamber 13 is connected radially, by means of injection channels 15, to a feed duct 16 disposed at the centre of the ring defined by the chamber for injecting moulding material, for example, thermoplastic material. Figure 2 shows a plan view of one of the two half-shells, the other being substantially specular with the exception of the channel 16. As can be seen, the chamber 13 can be advantageously made by juxtaposing a first outer annular recess 17 and a second inner annular recess 18, concentric to each other and interconnected by radial grooves 19. The protrusions 14 are thus substantially made in the form of an annular diaphragm interrupted by channels 19.

The inner annular recess 18 is in turn connected to a common point, from which the duct 16 branches off, by means of radial grooves 20 forming the ducts 15.

In use, after having positioned the strip of material and closed the mould, the edge of the hole is firmly positioned at the centre of the chamber with the protrusions clamping the surface close to the edge of the hole. Said edge is thus held in the correct intermediate position in the chamber and any possible frayed threads of the sheet around the hole are kept compressed at the centre of the chamber.

When the moulding material is introduced through the feed duct 16, it runs through the radial ducts 15 until it reaches the first innermost portion of the chamber 13 and then on, through the connecting channels between the protrusions 14 (of a sufficient number and diameter to ensure a rapid and uniform flow of the moulding material), until it reaches the second portion or peripheral portions of the chamber.

The flow of liquid moulding material does not disturb the disposition of the fabric in the mould thanks to the positioning diaphragms 14 close to the edge of the hole.

In this way it is possible to ensure the perfect moulding of a loop or eyelet covering the edge of the hole.

The distance of the clamping diaphragms 14 from the edge of the hole depends upon the flexibility of the sheet 11 and upon how easily it becomes frayed.

Figure 3 shows the product after the mould is opened. The moulded loop or eyelet, which is generically indicated by reference 20, is composed of a first inner annular portion 21 with a generically C-shaped radial section which incorporates the edge of the hole and extends with the ends of the C along the two sides of the sheet 11. Each end of the C faces an annular element, 22 and 23 respectively, disposed concentrically adhering to the corresponding surface of the sheet 11 and connected by means of ribs 24 to the central portion 21. A structure of this kind offers exceptional sturdiness with a minimum amount of material.

Immediately after moulding, the eyelet has central feedheads 25 which can be easily and quickly removed by means of a punch 26 with a diameter equivalent to the diameter of the central channel of the eyelet, that is to say equivalent to the internal diameter of the chamber 13.

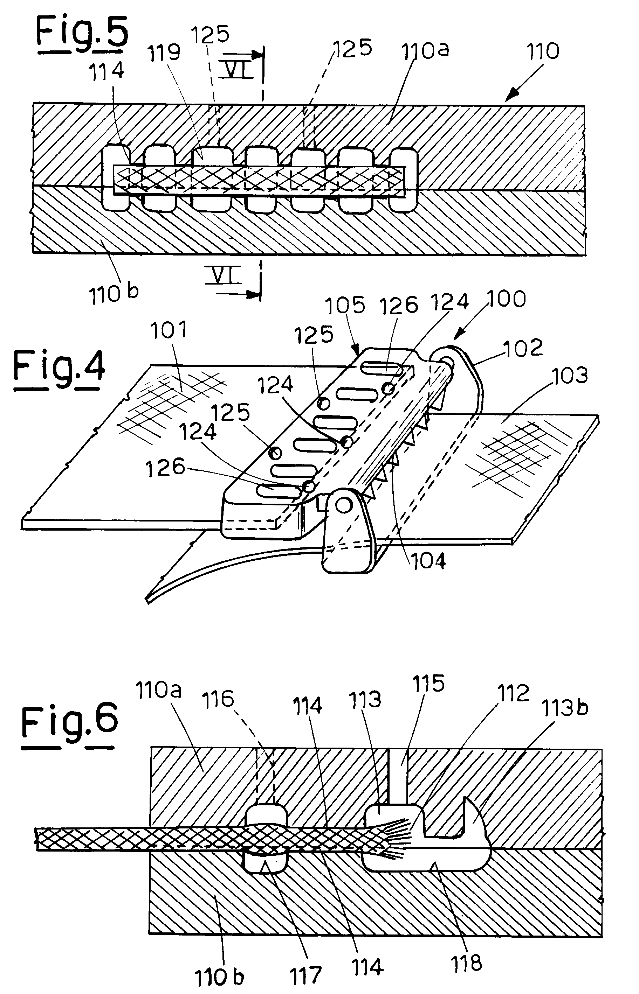

A further embodiment applying the principles of the invention claimed herein is described below, with reference to figures 4-6.

Figure 4 shows a terminal element for a strip of flexible material, for example a belt. In particular, the element shown is by way of example a fastening clamp 100, comprising a casing portion 105 moulded onto one end of the strip 101 and a fastening or clamping portion 102, pivotable with respect to the casing 105 so as to block a second strip 103 between the clamp 102 and casing 105. In order to improve the fastening function, the casing and/or the clamp 102 can be provided with protruding teeth 104.

A terminal of this kind is generically known. Once the strip has been inserted into the terminal 103, it is sufficient to rotate the clamp to prevent the reciprocal sliding of the strips 101 and 103. For example, the two strips 101 and 103 can be two ends of a belt, so as to provide them with a fastening or adjusting function.

Figures 5 and 6 show schematic cross-sections of a mould made according to the invention for moulding the casing portion of the terminal 100.

The mould, generically indicated by reference 110, is composed for example of two half-shells 110a and 110b and is closed over the strip of material 101 (in particular nylon fabric or other synthetic material) in correspondence with a terminal end 112 to be covered with the moulded element.

As can be clearly seen in figure 6, the mould comprises a generically annular chamber 113 with a C-shaped cross-section which clasps the edge 112 and extends along the two surfaces of the strip.

As can also be clearly seen in figure 5, on the opposing faces of the strip 101, the chamber 113 comprises protrusions 114 facing towards their respective surface of the strip which grip it between them close to the edge 112. The chamber 113 comprises an extension 113b having a shape suitable for forming elements which grip the terminal casing. As will be obvious to the expert in the field, said extension will therefore be shaped in accordance with the particular application of the terminal and may even be omitted whenever for example the terminal element serves exclusively as a covering for the end of the strip.

The chamber 113 is connected to injection channels 115, 116, for introduction into the latter of moulding material, for example, a thermoplastic material. The channels or ducts 115, 116 are advantageously alternately disposed in portions of the chamber 113 on one side and the other of the plurality of parallel protrusions 114, thereby enabling the plastic material to spread more homogeneously throughout the chamber. Figure 4 schematically shows the marks, indicated by references 124, 125, left after cutting the feed-heads which are formed by the ducts 115, 116, respectively.

The chamber 113 can be made in the form of two recesses 117, 118, interconnected by parallel grooves 119. In this way, the protrusions 114 are substantially made in each half-mould in the form of a rectilinear diaphragm interrupted by the channels 119.

In use, after having positioned the strip of material and closed the mould, the edge of the strip is firmly positioned at the centre of the chamber with the protrusions clamping the surface close to the edge. Said edge is thus held in the correct intermediate position in the chamber and any possible frayed threads of the edge (for example caused by cutting the strip to form the edge to be covered) are kept compressed at the centre of the chamber, as can be clearly seen in figure 6.

The flow of fluid moulding material, introduced through the ducts 115, 116, does not disturb the disposition of the fabric in the mould thanks to the positioning diaphragms 114 close to the edge of the hole.

After moulding, the terminal element thus obtained will have parallel and spaced apart recesses along its entire length, as indicated generically by reference 26 in figure 4.

At this point it will be clear that the intended scopes have been achieved, by providing an innovative mould for producing elements such as terminals or perfect eyelets for covering holes in thin flexible materials, which prevents the chaotic disposition of fibres inside the moulding chamber, thereby ensuring constantly perfect results even in the case of particularly frayable woven materials.

The foregoing description of embodiments applying the innovatory principles of this invention is obviously given by way of example in order to illustrate such innovatory principles and should not therefore be understood as a limitation to the sphere of the invention claimed herein. For example, the proportions between the various recesses of the mould will depend upon the desired specific practical and aesthetical requirements.

Although, in producing eyelets, it has been found to be advantageous for the injection channels to be disposed radially to the chambers, they can be disposed otherwise. For example, the channels 15 can be disposed axially to the chamber on one side of the sheet. The materials used for the woven sheet and moulded elements can obviously be of the most diverse types. For example, in addition to nylon, other materials can be used such as ostaforn, makrolon, polyester, polythene, polyethylene, polypropylene and the like.

## Claims

1. Mould (10, 110) for moulding an element for covering an edge of a thin sheet of flexible material in particular fabric, comprising a chamber (13, 113) with a substantially C-shaped section crosswise to the extension of the edge which clasps the edge and extends along the two sides of the sheet, the chamber (13, 113) being provided on either side of the sheet with internal protrusions (14, 114) opposingly directed towards the surface of the sheet to clamp it between them close to said edge.

2. Mould as claimed in claim 1, characterized by the fact that said edge is the edge of a hole passing through the sheet, the chamber (13) being of an annular shape to radially grasp the edge of the hole.

3. Mould as claimed in claim 2, characterized by the fact that the protrusions (14) on each side are shaped in the form of annular diaphragms interrupted by radial passages (19).

4. Mould as claimed in claim 2, characterized by the fact of having ducts (15) for injection of moulding material which are connected to said chamber (13) in a radial direction from the centre of the ring defined by the chamber.

5. Mould as claimed in claim 1, characterized by the fact that said edge is the edge of an end of the sheet made in the form of an elongated strip, the chamber (113) being of an elongated shape parallel to said edge.

6. Mould as claimed in claim 5, characterized by the fact that the protrusions (114) on each side are made in the form of a diaphragm in the middle of the chamber interrupted by crosswise passages (119).

7. Mould as claimed in claim 6, characterized by the fact of having ducts (115, 116) for injection of moulding material which are connected to said chamber (13) in alternate positions on both sides of the intermediate diaphragm.

8. Terminal element (100) covering an edge (112) of ends of a thin flexible strip (101), in particular of fabric, obtained by means of the mould as claimed in claims 5, 6 or 7.

9. Eyelet (20) covering the edge of a hole (12) made through a thin sheet of material (11), in particular fabric, obtained by means of the mould as claimed in claims 2, 3 or 4.

10. Eyelet (20) covering the edge of a hole (12) passing through a thin sheet of material (11), in particular fabric, comprising a first inner annular portion (21) having a generically C-shaped radial section which incorporates the edge of the hole and extends with ends of the C along the two sides of the sheet (11), each end of the C being disposed facing an annular element (22, 23) disposed concentrically adhering to the corresponding surface of the sheet (11) and connected by means of ribs (24) to the first portion (21).

11. Eyelet as claimed in claim 10, characterized by the fact that the ribs (24) are disposed radially to the annular elements.
